# EUROPEAN PATENT APPLICATION

(11) **EP 4 700 800 A1**
(43) Date of publication of application: **25.02.2026**
(21) Application number: 24792413.7
(22) Date of filing: 18.03.2024
(51) Int. Cl.: H01B 7/00, C09D 7/43, C09D 7/61, C09D 183/04, H01B 13/00, H02G 3/22

(54) **BUS BAR AND METHOD FOR PRODUCING SAME, AND POWER STORAGE DEVICE**

(30) Priority: 21.04.2023 JP 2023070353
(71) Applicant: IBIDEN CO., LTD., Ogaki-shi, Gifu 503-8604 (JP)
(72) Inventor: GOTO, Shinnosuke, Ibi-gun, Gifu 501-0695 (JP)
(74) Representative: Hoffmann Eitle
(86) International application number: PCT/JP2024/010611
(87) International publication number: WO 2024/219137

(57) **Abstract**

To provide a bus bar in which an insulating film is formed in a desired region even when a bus bar body has a complicated shape, and peeling off or the like of the insulating film can be suppressed, and a method for producing the same. A bus bar (20) includes a bus bar body (25) and an insulating film (10) formed on a surface of the bus bar body (25). The bus bar body (25) includes a pair of main surface portions (25a) facing each other, a plurality of end surface portions (25b) connecting the main surface portions (25a) facing each other, and corner portions (25c) formed between the main surface portions (25a) and the end surface portions (25b). An outer surface of the insulating film (10) formed on the corner portion (25c) of the bus bar body (25) has an R shape. A film thickness of the insulating film (10) formed on the corner portion (25c) of the bus bar body (25) is larger than a film thickness of the insulating film (10) formed on the main surface portion (25a) of the bus bar body (25).

## Description

### TECHNICAL FIELD

The present invention relates to a bus bar, a method for producing the same, and a power storage device in which a plurality of battery cells or battery modules are connected to each other by the bus bar.

### BACKGROUND ART

A power storage device in which a plurality of battery cells are connected to each other in series or in parallel by a bus bar is to be mounted on various electronic devices, an electric vehicle (EV) driven by an electric motor, a hybrid vehicle, and the like. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulation property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, it is necessary to wind the ceramic tape around the bus bar body. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, a sufficient insulation property and heat resistance cannot be obtained. It is also assumed that an adhesive surface of the ceramic tape is peeled off.

In addition, with the recent increase in demand for electric vehicles or the like, there is a demand for miniaturization and high energy of a power storage device to be mounted. Therefore, an internal structure of the power storage device is also complicated, and the bus bar has a more complicated shape and is to be used in a narrow region. Further, in the case of producing the power storage device using mass-produced bus bars, it is necessary to transport a large number of bus bars. In this manner, when the bus bar is transported or is used in a narrow region, corner portions of the bus bars may come into contact with each other, and an insulating film may be damaged. In addition, since the corner portion of the bus bar easily dissipates heat, there is a problem that a temperature of the corner portion of the bus bar body is easily changed and the film is easily peeled off due to a temperature difference.

The present invention has been made in view of such a problem, and an object of the present invention is to provide a bus bar capable of suppressing peeling off or the like of an insulating film from a bus bar body even when bus bars collide with each other or a bus bar collides with another component or even when a temperature change is repeated. Another object of the present invention is to provide a method for producing a bus bar in which an insulating film having excellent strength can be formed on a bus bar body in a desired region by simple steps even when the bus bar body has a complicated shape. Still another object of the present invention is to provide a power storage device in which a plurality of battery cells or battery modules are connected to each other by a bus bar in which peeling off of an insulating film is suppressed, and which exhibits high safety even in an abnormal state.

### SOLUTION TO PROBLEM

The above object of the present invention is achieved by the following configuration [1] relating to a bus bar.
[1] A bus bar for use in a power storage device including a battery cell, the bus bar including:
   a bus bar body including a pair of main surface portions facing each other, a plurality of end surface portions connecting the pair of main surface portions facing each other, and corner portions between the main surface portions and the end surface portions; and
   an insulating film formed on a surface of the bus bar body, in which
   an outer surface of the insulating film formed on the corner portion of the bus bar body has an R shape, and
   a film thickness of the insulating film formed on the corner portion of the bus bar body is larger than a film thickness of the insulating film formed on the main surface portion of the bus bar body.
   In addition, preferred embodiments of the present invention relating to the bus bar relate to the following [2] to [11].
[2] The bus bar according to [1], in which the insulating film is formed in an arc shape on the end surface portion in a cross-sectional view in a direction parallel to a thickness direction of the bus bar body and orthogonal to the end surface portion.
[3] The bus bar according to [1] or [2], in which the insulating film contains a filler.
[4] The bus bar according to [3], in which the filler contains an inorganic compound.
[5] The bus bar according to [4], in which the inorganic compound is at least one kind selected from silica, alumina, mullite, and zirconia.
[6] The bus bar according to [4] or [5], in which the inorganic compound includes at least one kind selected from a glass-based material, mica, kaolin, talc, clay, pyrophyllite, montmorillonite, bentonite, wollastonite, xonotlite, zeolite, diatomaceous earth, and halloysite.
[7] The bus bar according to any one of [4] to [6], in which the inorganic compound has at least one kind selected from a flaky shape, a fibrous shape, and a particulate shape.
[8] The bus bar according to [6] or [7], in which the inorganic compound contains at least one of a flaky glass-based material and mica.
[9] The bus bar according to any one of [3] to [9], in which a content of the filler with respect to all components in the insulating film is 3 vol% to 70 vol%.
[10] The bus bar according to any one of [1] to [9], in which the insulating film contains a silicone-based material.
[11] The bus bar according to any one of [1] to [9], in which the insulating film contains a silicone resin and a thixotropic agent.
   In addition, the above object of the present invention is achieved by the following configuration [12] relating to a method for producing a bus bar.
[12] A method for producing a bus bar according to any one of [1] to [11], the method including:
   a covering step of covering, with an insulating coating material, the surface of the bus bar body including the pair of main surface portions facing each other, the plurality of end surface portions connecting the pair of main surface portions facing each other, and the corner portions between the main surface portions and the end surface portions; and
   a drying step of drying the insulating coating material to form the insulating film, in which
   the film thickness of the insulating film on the corner portion of the bus bar body is larger than the film thickness of the insulating film on the main surface portion of the bus bar body.
   Preferred embodiments of the present invention relating to the method for producing a bus bar relate to the following [13] and [14].
[13] The method for producing a bus bar according to [12], in which in the covering step, the bus bar body is immersed in the insulating coating material, and the surface of the bus bar body is covered with the insulating coating material.
[14] The method for producing a bus bar according to [13], in which in the covering step, the bus bar body is immersed in the insulating coating material, and then the bus bar body is pulled up from the insulating coating material in a state where the corner portion or the end surface portion of the bus bar body is directed vertically downward.
   The above object of the present invention is also achieved by the following configuration [15] relating to a power storage device.
[15] A power storage device including:
   a plurality of battery cells or battery modules connected to each other by the bus bar according to any one of [1] to [11].

### ADVANTAGEOUS EFFECTS OF INVENTION

With the bus bar according to the present invention, since the film thickness of the insulating film formed on the corner portion of the bus bar body is larger than the film thickness of the insulating film formed on the main surface portion, the peeling off of the insulating film from the corner portion can be suppressed even when the bus bar is transported or is used in a narrow region. In addition, in the cross-sectional view of the bus bar, since the outer surface of the insulating film formed on the corner portion of the bus bar body has an R shape and the corner portion is not pointed, even in the case where flying fragments or the like collide with the outer surface of the insulating film, it is possible to suppress damage to the insulating film due to the fragments or the like.

In addition, with the method for producing a bus bar according to the present invention, even when the bus bar body has a complicated shape, since the insulating film can be formed in a desired region by a simple method, a complicated operation such as a winding operation is not required as compared with the case of using a tape, winding unevenness of the insulating film or a gap between the bus bar body and the insulating film is not generated, and a bus bar in which the peeling off of the insulating film is suppressed can be easily produced.

Further, with the power storage device according to the present invention, since the battery cells or the battery modules are connected to each other by the bus bar in which the occurrence of the peeling off of the insulating film is suppressed, an insulation failure is less likely to occur, heat resistance is excellent, and high safety is exhibited even in an abnormal state. In addition, even in the case where the temperature of the corner portion of the bus bar body changes, the peeling off of the insulating film can be suppressed.

### BRIEF DESCRIPTION OF DRAWINGS

[Fig. 1] Fig. 1 is an exploded perspective view showing a state where a bus bar according to an embodiment of the present invention is mounted to a battery cell.
[Fig. 2] Fig. 2 is a perspective view showing a part of a bus bar body in the bus bar shown in Fig. 1.
[Fig. 3] Fig. 3 is an enlarged schematic diagram showing a part of a cross section of the bus bar shown in Fig. 1 taken along a line A-A.
[Fig. 4] Fig. 4 is an enlarged schematic diagram showing a part of a cross section of a bus bar in the case of using a bus bar body having a shape different from that in Fig. 3.
[Fig. 5] Fig. 5 is a schematic diagram showing a power storage device according to an embodiment of the present invention.

### DESCRIPTION OF EMBODIMENTS

Hereinafter, an embodiment of the present invention will be described in detail with reference to the drawings. Note that, the present invention is not limited to the embodiment described below, and can be freely changed and implemented without departing from the gist of the present invention.

### [Bus Bar]

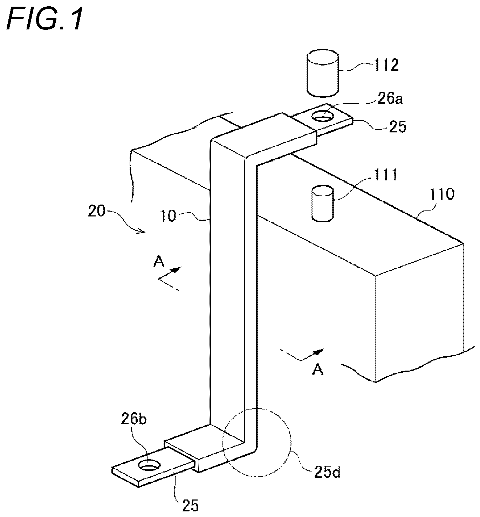

Fig. 1 is an exploded perspective view showing a state where a bus bar 20 according to an embodiment of the present invention is mounted to a battery cell 110. As shown in Fig. 1, a bus bar body 25 made of a conductive material is, for example, a metal plate member having a Z shape as a whole, and is to be fixed by inserting an electrode 111 of the battery cell 110 into a connection hole 26a at one tip and covering the electrode 111 with a terminal cap 112. Adjacent battery cells (not shown) or external devices (not shown) are connected to a connection hole 26b at the other tip of the bus bar body 25.

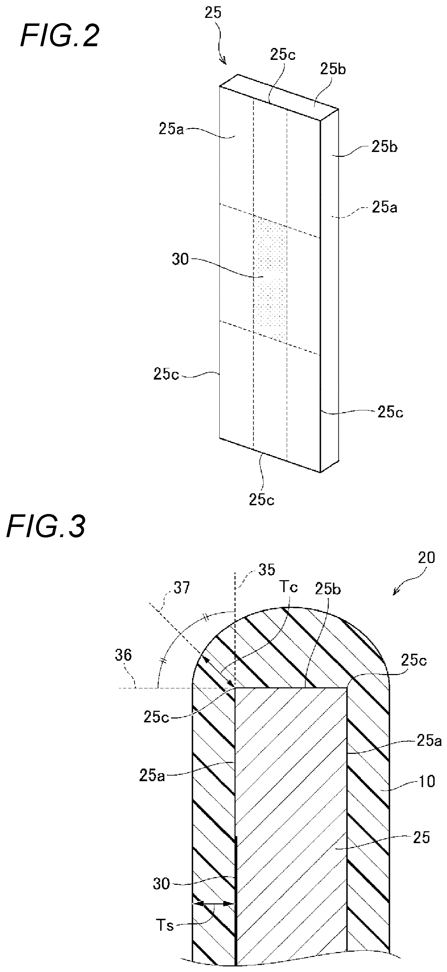

Fig. 2 is a perspective view showing a part of the bus bar body in the bus bar shown in Fig. 1. Fig. 3 is an enlarged schematic diagram showing a part of a cross section of the bus bar shown in Fig. 1 taken along a line A-A. Note that, as shown in Fig. 1, the bus bar 20 is, for example, a Z-shaped plate member, but in the present description, a feature of the bus bar 20 will be described as a plate member excluding a bent portion.

As shown in Fig. 2, a corner portion 25c of the bus bar body 25 has a rectangular shape having a substantially right angle in a cross-sectional view. The bus bar body 25 includes a pair of main surface portions 25a facing each other, a plurality of end surface portions 25b connecting the main surface portions 25a to each other, and corner portions 25c between the main surface portions 25a and the end surface portions 25b. That is, the main surface portion 25a is a surface extending in a direction orthogonal to a thickness direction, and the end surface portion 25b is a surface substantially parallel to the thickness direction. As shown in Fig. 3, the bus bar 20 has an insulating film 10 formed on a surface of the bus bar body 25.

In the present embodiment, as shown in Fig. 3, in a cross-sectional view of the bus bar 20 in a direction parallel to the thickness direction of the bus bar body 25 and orthogonal to the end surface portion 25b, an outer surface of the insulating film 10 formed on the corner portion 25c has an R shape. In addition, the insulating film 10 is formed in an arc shape on the end surface portion 25b. Further, a film thickness of the insulating film 10 formed on the corner portion 25c of the bus bar body 25 is larger than a film thickness of the insulating film 10 formed on the main surface portion 25a of the bus bar body 25.

The insulating film 10 having an R shaped outer surface indicates that the outer surface of the insulating film 10 is a smooth surface even in the case where the corner portion 25c of the bus bar body 25 is formed at a right angle in a cross-sectional view. In addition, the insulating film 10 formed in an arc shape means that, in the cross-sectional view of the end surface portion 25b, the film thickness increases toward a center side from a corner portion 25c side.

Note that, although not shown, the bus bar body 25 may have various shapes depending on an installation location of the battery cell 110, such as an I-shape as a whole or an irregular shape having a curved portion.

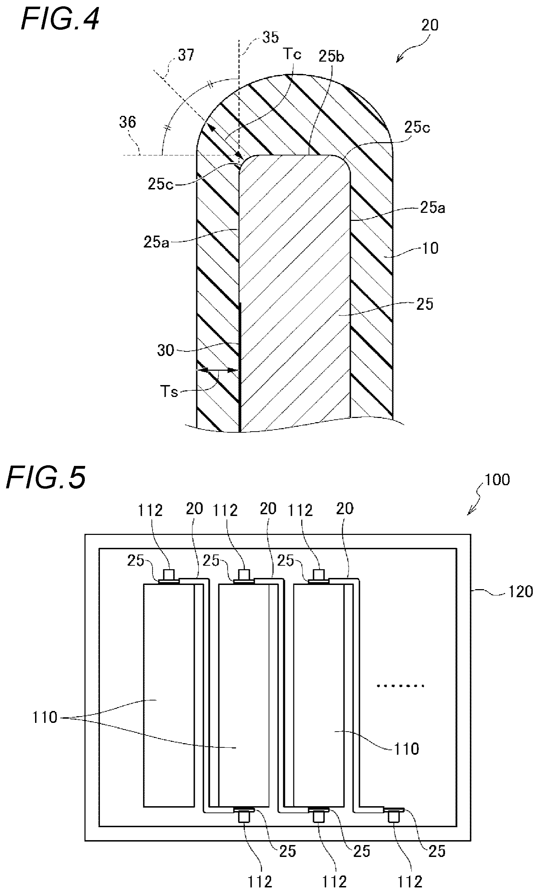

The bus bar 20 configured as described above is to be applied to, for example, a power storage device 100 (see Fig. 5) to be described later and is to be mounted on an electric vehicle or the like. The bus bar is to be used in a narrow region in order to cope with recent miniaturization of the power storage device and a high capacity of the battery. In addition, when bus bars are mass-produced and transported, the bus bars come into contact with each other, and the insulating film 10 is easily peeled off particularly at a corner portion. Further, when the power storage device is in use, a temperature of the corner portion 25c of the bus bar body 25 is likely to change, and the insulating film 10 is likely to peel off due to a temperature difference of the bus bar body 25.

In the present embodiment, the film thickness of the insulating film 10 formed on the corner portion 25c of the bus bar body 25 is larger than the film thickness of the insulating film 10 formed on the main surface portion 25a of the bus bar body 25. Therefore, even in the case where contact between the bus bars 20 or between the bus bar 20 and another component or a temperature change occurs, it is possible to suppress the occurrence of peeling off of the insulating film 10.

In addition, a metal piece of the battery cell 110 that has experiences thermal runaway, a film piece of an insulating film in another bus bar, a fragment of a battery case 120, or the like may collide with the insulating film 10 on the surface of the bus bar 20. In the present embodiment, the film thickness of the insulating film 10 formed on the corner portion 25c of the bus bar body 25 is larger than the film thickness on the main surface portion 25a, and the outer surface of the insulating film 10 formed on the corner portion 25c has an R shape. Therefore, even in the case where flying fragments or the like collide with the outer surface of the insulating film 10, damage to the insulating film 10 due to the fragments or the like can be minimized. Further, since the insulating film 10 is formed in an arc shape on the end surface portion 25b of the bus bar body 25, and the colliding fragments or the like are reflected in an oblique direction, it is possible to alleviate the bus bar 20 from being subjected to an impact due to the fragments or the like.

Further, when the bus bar body 25 has a shape having a bent portion 25d or a curved portion (not shown) like the Z shape shown in Fig. 1, an operation is complicated in the method of winding the ceramic tape as in the bus bar in Patent Literature 1. Specifically, the winding operation takes time and effort to prevent winding unevenness or a gap from generating in the bent portion 25d or the curved portion. In addition, even when the bus bar 20 is in use, it is assumed that a gap is generated between the bus bar body 25 and the tape due to vibration or the like, or an adhesive is peeled off.

In contrast, in the present embodiment, the insulating film 10 can be formed by a method of covering the surface of the bus bar body 25 with an insulating coating material. Therefore, the above problems do not occur. When "dip coating" is used as a method of covering the surface of the bus bar body 25 with the insulating coating material, steps of producing the bus bar can be further simplified. In this manner, the insulating film 10 formed by covering the surface of the bus bar body 25 with the insulating coating material and drying the insulating coating material can have excellent effects in terms of peelability and operationability, unlike an insulating layer formed by winding a tape or the like.

Note that, in the bus bar 20 shown in Fig. 3, the corner portion 25c of the bus bar body 25 has a rectangular shape in the cross-sectional view, but in the present invention, the cross-sectional shape of the corner portion 25c is not particularly limited. As shown in Fig. 4, the corner portion 25c of the bus bar body 25 may have an R shape. In any case, as long as the film thickness of the insulating film 10 formed on the corner portion 25c of the bus bar body 25 is larger than the film thickness of the insulating film 10 formed on the main surface portion 25a and the surface of the insulating film 10 has an R shape, the above effects can be obtained.

### (Film Thickness of Corner Portion: 300 µm or More and 2000 µm or Less)

When the film thickness formed on the corner portion 25c of the bus bar body 25 is too large, it is difficult to obtain the above effects. Therefore, the film thickness formed on the corner portion 25c is preferably 2000 µm or less, more preferably 1500 µm or less, and still more preferably 1000 µm or less. On the other hand, when the film thickness formed on the corner portion 25c is too small, it is difficult to ensure the insulation property and the heat resistance of the bus bar 20. Therefore, the film thickness of the insulating film 10 formed on the corner portion 25c is preferably 300 µm or more, more preferably 400 µm or more, and still more preferably 500 µm or more.

Here, a method of measuring the film thickness of the insulating film 10 on the corner portion 20c of the bus bar 20 and the film thickness of the insulating film 10 on the main surface portion 25a will be described below with reference to Figs. 2 to 4. In the case where the bus bar 20 has a bent portion or a curved portion, the bus bar 20 is cut in the vicinity of the bent portion or the curved portion, and the film thickness of the insulating film 10 is measured as a rectangular flat plate member.

When the film thickness of the insulating film formed on the main surface portion is to be measured, as shown in Fig. 2, two pairs of corner portions 25c linearly extending around one main surface portion 25a of a pair of main surface portions of the bus bar body 25 are each divided into three equal parts, i.e., the main surface portion 25a is divided into nine regions. In the present embodiment, among the nine regions, the film thickness is measured at any three positions in a central region 30 (indicated by thick lines in Figs. 3 and 4), and an average value thereof is defined as a "film thickness Ts of the insulating film formed on the main surface portion". Note that, according to the above method, the main surface portion of the bus bar body 25 is divided into nine regions, but when the film thickness of the insulating film 10 is to be measured, the bus bar body 25 is not exposed, and thus it is difficult to strictly divide the corner portion 25c into three equal parts. However, since the thickness of the insulating film 10 is negligible compared to the size of the bus bar body 25, two pairs of corner portions 25c facing each other may be divided into substantially three equal parts in a state where the insulating film 10 is provided.

When the film thickness of the insulating film formed on the corner portion is to be measured, first, the insulating film is cut along a line connecting centers of at least a pair of corner portions 25c facing each other of the two pairs of corner portions 25c constituting the main surface portion 25a. Then, as shown in Fig. 3 or 4, the film thickness of the insulating film on the corner portion is measured at the cut surface. Specifically, in the bus bar body 25, for example, extension lines 35 and 36 are respectively drawn with respect to the main surface portion 25a and the end surface portion 25b constituting the corner portion 25c, and a bisector of an angle formed by the two extension lines 35 and 36 is set as a corner portion measurement line 37. Then, in the corner portion measurement line 37, a distance from the surface of the bus bar body 25 to the surface of the insulating film 10 is measured, and an average value thereof is defined as a "film thickness Tc of the insulating film formed on the corner portion".

In the bus bar according to the present embodiment, since the film thickness Tc of the insulating film 10 formed on the corner portion 25c of the bus bar body 25 is larger than the film thickness Ts of the insulating film 10 formed on the main surface portion 25a, the above effects can be obtained.

In addition, in the case where there are a plurality of corner portions 25c, by adjusting a film thickness of each of the corner portions 25c and intentionally forming the corner portion 25c having the largest film thickness, it is possible to suppress the occurrence of peeling off of the insulating film from the corner portion that particularly requires strength among the plurality of corner portions 25c.

As described above, by making the thickness of the insulating film 10 on the corner portion 25c of the bus bar body 25 larger than the thickness of the insulating film 10 on the main surface portion 25a, it is possible to suppress peeling off of the insulating film 10 from the corner portion 25c during use or transportation in a narrow place. Further, a material of the insulating film 10 capable of further improving the insulation property and the heat resistance will be described below.

The insulating film 10 preferably contains a filler. The filler can improve the heat resistance. Since an inorganic compound has a high melting point and more excellent heat resistance, the insulating film 10 more preferably contains an inorganic compound as the filler, and among these, more preferably contains a silicate compound. In the present embodiment, as to be described later, the insulating film 10 preferably contains a silicone-based material as a binder. Since the silicone-based material can be changed into SiO₂ by thermal decomposition, when the insulating film 10 contains a silicate compound having the same component as SiO₂ as the inorganic compound, a bonding force between the inorganic compound and the binder can be increased. When the material of the insulating film 10 is selected in this manner, the insulating film 10 can further improve the heat resistance and fire resistance. Therefore, in the case where the bus bar 20 (see Fig. 3) is used in the power storage device 100, the bus bar 20 can be protected from a high temperature or a flame from the battery cell 110 that has experiences thermal runaway. In addition, a chain reaction of the thermal runaway to the adjacent battery cell 110 via the bus bar 20 can be prevented.

The inorganic compound preferably includes at least one kind selected from silica, alumina, mullite, and zirconia. These compounds have a melting point equal to or higher than a melting point of a metal material used for a general bus bar body and equal to or higher than an assumed temperature of the thermal exposure, and have a high insulation property, and thus can be suitably used as the material of the insulating film 10.

In addition, the inorganic compound also preferably includes at least one kind selected from a glass-based material, mica, kaolin, talc, clay, pyrophyllite, montmorillonite, bentonite, wollastonite, xonotlite, zeolite, diatomaceous earth, and halloysite.

Further, the inorganic compound has preferably at least one kind selected from a flaky shape, a fibrous shape, and a particulate shape. Among these, a flaky glass is particularly oriented in a plane in the film and exhibits an excellent insulation property and heat resistance. Therefore, it is particularly preferable to contain a flaky glass as the inorganic compound. Note that, the mica described above is also preferably used for the same reason as that for the flaky glass.

A content of the filler with respect to all components in the insulating film 10 is preferably 3 vol% to 70 vol%, more preferably 10 vol% to 60 vol%, and still more preferably 20 vol% to 50 vol%. When the content of the filler is less than 3 vol%, the insulation property and the heat resistance may not be sufficiently obtained. As to be described later, the insulating film 10 is formed by "dip coating", but when the content of the filler is more than 70 vol%, a viscosity of the insulating coating material to be dipped is too high, and film formability is deteriorated.

In addition, the insulating film 10 preferably contains a silicone-based material as a binder because of its excellent incombustibility and heat resistance. Examples of the silicone-based material include a silicone resin, and the film thickness of the insulating film 10 can be easily controlled by using a thixotropic agent in combination as a thickener.

Note that, in addition to the filler and the silicone-based material described above, the insulating film 10 may contain other materials such as a flame retardant, a dispersant, and a pigment as long as the insulation property and the heat resistance are not influenced.

### [Method for Producing Bus Bar]

In the present invention, a method for producing the bus bar is not particularly limited, and various methods such as dip coating, spray coating, coating using a brush or the like, and powder coating can be used as a method for covering the bus bar body 25 with the insulating coating material. Among these coating methods, dip coating is preferably used in terms of easy operation as a step of producing the bus bar. An example of a method for producing a bus bar using dip coating will be described below with reference to Fig. 1.

### (Step of Preparing Bus Bar Body and Insulating Coating Material)

First, the bus bar body 25 and the insulating coating material are prepared. As shown in Fig. 2, the bus bar body 25 includes the pair of main surface portions 25a facing each other, the plurality of end surface portions 25b connecting the main surface portions 25a facing each other, and the corner portions 25c between the main surface portions 25a and the end surface portions 25b. The insulating coating material is prepared by charging a predetermined amount of filler into a silicone resin and sufficiently mixing them.

### (Covering Step)

Next, peripheries of the connection holes 26a and 26b of the bus bar body 25 are masked, and then the surface of the bus bar body 25 is covered with the insulating coating material. In the present embodiment, the bus bar body 25 is immersed in the insulating coating material and pulled up from the insulating coating material, so that a desired region of the surface of the bus bar body 25 is covered with the insulating coating material.

### (Drying Step)

Thereafter, the insulating coating material covered on the surface of the bus bar body 25 is dried and cured to form the insulating film 10.

**In** the present embodiment, the film thickness of the insulating film 10 on the corner portion 25c of the bus bar body 25 needs to be larger than the film thickness of the insulating film 10 on the main surface portion 25a. As a method thereof, it is possible to use, in the covering step, a method in which the bus bar body 25 is immersed in the insulating coating material, and then the bus bar body 25 is pulled up from the insulating coating material in a state where the corner portion 25c or the end surface portion 25b of the bus bar body 25 is directed vertically downward. However, the method of making the film thickness of the insulating film 10 on the corner portion 25c of the bus bar body 25 larger than the film thickness of the insulating film 10 on the main surface portion 25a is not particularly limited.

Note that, in the case of using spray coating, coating using a brush or the like, powder coating, or the like as the method of forming the insulating film 10 on the surface of the bus bar body 25, an insulating coating material or an insulating material only needs to be mainly disposed on the corner portion 25c of the bus bar body 25. In this manner, the insulating film obtained by using spray coating, coating using a brush or the like, powder coating, or the like can also be referred to as an "insulating coating film".

A covering amount of the insulating coating material may be appropriately adjusted by adjusting a pulling up speed, a drying temperature, or the like. Specifically, the insulating coating material is preferably applied such that the film thickness of the insulating film 10 on the corner portion 25c of the bus bar body 25 after drying is 300 µm or more, preferably 400 µm or more, and more preferably 500 µm or more. In addition, the insulating coating material is preferably applied such that the film thickness of the insulating film 10 on the corner portion 25c of the bus bar body 25 after drying is 2000 µm or less, preferably 1500 µm or less, and more preferably 1000 µm or less.

In addition, a content of the filler with respect to all solid components in the insulating coating material is preferably 3 vol% to 70 vol%, more preferably 10 vol% to 60 vol%, and still more preferably 20 vol% to 50 vol%. As described above, when the content of the filler is less than 3 vol%, the insulation property and the heat resistance may not be sufficiently obtained. On the other hand, when the content of the filler is more than 70 vol%, the viscosity of the insulating coating material is too high, and there is a possibility that the film formability decreases.

When the bus bar body 25 has a shape having the bent portion 25d or the curved portion (not shown) like the Z-shape shown in Fig. 1, operation efficiency decreases in the method of winding the ceramic tape as in the bus bar in Patent Literature 1. Specifically, the winding operation may take time and effort to prevent the winding unevenness or the gap from generating in the bent portion 25d or the curved portion. In addition, when the bus bar is in use, it is assumed that a gap is generated between the bus bar body and the tape due to vibration or the like, or an adhesive is peeled off.

In contrast, according to the method for producing a bus bar using dip coating, for example, as in the present embodiment, since the bus bar body 25 is immersed in the insulating coating material, pulled up, and then dried to form the insulating film 10, the bus bar can be produce in simple steps. Therefore, the production cost can also be reduced.

### [Power Storage Device]

Fig. 5 is a schematic diagram showing a power storage device according to an embodiment of the present invention. As shown in Fig. 5, the power storage device 100 includes a plurality of battery cells 110 housed in the battery case 120. The adjacent battery cell 110 and battery cell 110 are connected to each other by the bus bar 20, and an electrode is covered with the terminal cap 112.

The bus bar 20 is formed by covering the bus bar body 25 with the insulating film 10, and even when a certain battery cell 110 experiences thermal runaway, can protect the bus bar 20 and can prevent a chain reaction of the thermal runaway to the adjacent battery cell 110 via the bus bar 20. Therefore, in the power storage device of the present embodiment, since the plurality of battery cells 110 or battery modules (not shown) are connected to each other by the bus bar 20, high safety is exhibited even in an abnormal state.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-070353) filed on April 21, 2023, and the contents thereof are incorporated herein by reference.

### REFERENCE SIGNS LIST

10 insulating film
20 bus bar
25 bus bar body
25a main surface portion
25b end surface portion
25c corner portion
25d bent portion
26a, 26b connection hole
30 central region
37 corner portion measurement line
100 power storage device
110 battery cell
111 electrode
120 battery case

## Claims

1. A bus bar for use in a power storage device including a battery cell, the bus bar comprising:
a bus bar body including a pair of main surface portions facing each other, a plurality of end surface portions connecting the pair of main surface portions facing each other, and corner portions between the main surface portions and the end surface portions; and
an insulating film formed on a surface of the bus bar body, wherein
an outer surface of the insulating film formed on the corner portion of the bus bar body has an R shape, and
a film thickness of the insulating film formed on the corner portion of the bus bar body is larger than a film thickness of the insulating film formed on the main surface portion of the bus bar body.

2. The bus bar according to claim 1, wherein the insulating film is formed in an arc shape on the end surface portion in a cross-sectional view in a direction parallel to a thickness direction of the bus bar body and orthogonal to the end surface portion.

3. The bus bar according to claim 1, wherein the insulating film contains a filler.

4. The bus bar according to claim 3, wherein the filler contains an inorganic compound.

5. The bus bar according to claim 4, wherein the inorganic compound is at least one kind selected from silica, alumina, mullite, and zirconia.

6. The bus bar according to claim 4, wherein the inorganic compound includes at least one kind selected from a glass-based material, mica, kaolin, talc, clay, pyrophyllite, montmorillonite, bentonite, wollastonite, xonotlite, zeolite, diatomaceous earth, and halloysite.

7. The bus bar according to claim 4, wherein the inorganic compound has at least one kind selected from a flaky shape, a fibrous shape, and a particulate shape.

8. The bus bar according to claim 6, wherein the inorganic compound contains at least one of a flaky glass-based material and mica.

9. The bus bar according to claim 3, wherein a content of the filler with respect to all components in the insulating film is 3 vol% to 70 vol%.

10. The bus bar according to claim 1, wherein the insulating film contains a silicone-based material.

11. The bus bar according to claim 1, wherein the insulating film contains a silicone resin and a thixotropic agent.

12. A method for producing a bus bar according to any one of claims 1 to 11, the method comprising:
a covering step of covering, with an insulating coating material, the surface of the bus bar body including the pair of main surface portions facing each other, the plurality of end surface portions connecting the pair of main surface portions facing each other, and the corner portions between the main surface portions and the end surface portions; and
a drying step of drying the insulating coating material to form the insulating film, wherein
a film thickness of the insulating film on the corner portion of the bus bar body is larger than a film thickness of the insulating film on the main surface portion of the bus bar body.

13. The method for producing a bus bar according to claim 12, wherein in the covering step, the bus bar body is immersed in the insulating coating material, and the surface of the bus bar body is covered with the insulating coating material.

14. The method for producing a bus bar according to claim 13, wherein in the covering step, the bus bar body is immersed in the insulating coating material, and then the bus bar body is pulled up from the insulating coating material in a state where the corner portion or the end surface portion of the bus bar body is directed vertically downward.

15. A power storage device comprising:
a plurality of battery cells or battery modules connected to each other by the bus bar according to any one of claims 1 to 11.
